# EUROPEAN PATENT APPLICATION

(11) **EP 2 450 411 A1**
(43) Date of publication of application: **09.05.2012**
(21) Application number: 10189846.8
(22) Date of filing: 03.11.2010
(51) Int. Cl.: C09D 5/16, C09D 5/20, B01J 20/10

(54) **Absorbent multilayer coating system**

(71) Applicant: Akzo Nobel Coatings International B.V., 6824 BM Arnhem (NL)
(72) Inventor: Kooistra, Floris, NL-2343 EN, OEGSTGEEST (NL); Mitchell, Steven, SALISBURY, SP4 OJQ (GB); Govan, Norman, SALISBURY, SP4 OJQ (GB)
(74) Representative: Alferink, Petrus J.T.

(57) **Abstract**

The invention relates to a peelable multilayer coating system comprising
a) a peelable coating layer and
b) an absorbent top coating layer pigmented above the critical pigment volume concentration, and wherein the pigment comprises mesoporous inorganic particles.

## Description

The invention relates to a peelable multilayer coating system having an absorbent top layer.

International patent application WO 2008/157670 describes sacrificial barrier coatings which may be used to protect a wide variety of substrates from contaminants, including graffiti, as well as radioactive contaminants, dirt or soil, toxins, and the like. The barrier coating may be removed after deposition of a contaminant. The barrier coating and contaminant material may be removed by contacting the barrier coating and contaminant with a treating solution. The treating solution may be dehydrated to form a treating film. The barrier coating, contaminant material and treating film may be peeled from the substrate in a single step.

International patent application WO 2008/148763 relates to an aqueous coating composition for forming a peelable temporary coating on a substrate, said aqueous coating composition comprising at least one water-based film-forming polymer, characterized in that the composition additionally comprises solid particles of an amino resin based polymer.

International patent application WO 2005/103171 describes an aqueous strippable paint comprising one or more pigments, a polyether polyurethane binder having anionic stabilizing groups, and a second polyether having at least 20 wt. % of lipophilic parts. The first polyether has an acid number of at least 8, preferably at least 12, and the second polyether has 30-70 wt % of lipophilic parts. The mixing ratio of the first and second polyethers is at least 20:1

There is a need for absorbent coatings which have an improved ability to absorb contaminants and which are easy to remove from a coated substrate.

The invention now provides a peelable multilayer coating system comprising
a) a peelable coating layer and
b) an absorbent top coating layer pigmented above the critical pigment volume concentration, and wherein the pigment comprises mesoporous inorganic particles.

The multilayer coating system of the invention has an improved ability to absorb contaminants. Furthermore, the multilayer coating system can easily be removed from a substrate by manual peeling.

The multilayer coating system comprises a peelable coating layer a). Suitable coating compositions for preparing peelable coating layers a) are known in the art. Such coating compositions are, for example, described in international patent applications WO 2005/103171 and WO 2008/148763, and in United States patent US 5965195. The peelable coating layer may be prepared from an aqueous coating composition or from a non-aqueous coating composition. It is preferred that the peelable coating layer comprises solid particles of an amino resin based polymer. In one embodiment, the amino resin based polymer is a methyl urea based polymer. Coating compositions for forming a peelable and comprising such particles are described in more detail in international patent application WO 2008/148763, which is incorporated by reference. Suitable coating compositions for forming peelable coatings are also commercially available from AkzoNobel under the trade designations Intergard® 10220 and Sikkens Protect®. The peelable coating composition can be applied to a substrate by any of the known methods for applying coating compositions to a substrate. Examples of such application methods are spreading (e.g., brushing, rolling, by paint pad or doctor blade), spraying (e.g., airfed spraying, airless spraying, hot spraying, and electrostatic spraying), flow coating (e.g., dipping, curtain coating, roller coating and reverse roller coating), and electro-deposition. The substrate suitably is a non-porous substrate. Examples of suitable non-porous substrates are metals which may have been pre-treated or not, pre-treated wood, synthetic polymeric materials, and glass. Further suitable substrates are other coats of paint, such as are present on transportation vehicles and motor vehicles or parts thereof, e.g., passenger cars, bicycles, trains, trucks, buses, and airplanes.

After application of the coating composition for forming the peelable coating layer a), this layer is suitable at least partly dried before application of subsequent layers. Layer a) can be dried between 0 and 160°C, or between 5 and 80°C, or between 10 and 60°C, for example at ambient temperature. Drying at elevated temperature can be carried out in an oven. Alternatively, drying can be supported by infrared and/or near infrared radiation. In an alternative embodiment, a subsequent layer can also be applied to the wet coating layer a) in a so-called wet-on-wet application. The subsequent coating layer can be the absorbent top coating layer b). In that case, the peelable coating layer a) and the absorbent coating layer b) have a common layer boundary. However, it is also possible to apply one or more intermediate layers between layer a) and layer b), provided that the peelability of the entire coating system is not impaired.

As mentioned above, the absorbent top coating layer b) is a pigmented coating layer wherein the pigment is present in an amount above the critical pigment volume concentration (CPVC).

The pigment volume concentration (PVC) is the volume percentage of pigment in the dry paint film. The CPVC is understood as the pigment volume concentration where there is just sufficient binder to provide a completely adsorbed layer of binder on the pigment surfaces and to fill all the interstices between the particles in a close-packed system. The CPVC can be determined by wetting out dry pigment with just sufficient linseed oil to form a coherent mass. This method yields a value known as the "oil absorption" (OA), from which the CPVC can be calculated. The method for determining the OA is described in British Standard 3483 (BS3483). The CPVC can be calculated from the OA by the following formula: CPVC = 100% / (1 + (density_{pigment} / densityᵣₑₛᵢₙ)) x (OA / 100). If a mixture of pigments or resins having different densities is used, the respective average density of the pigment or resin mixture has to be used for the calculation.

The absorbent coating layer b) also comprises mesoporous inorganic particles. In the context of the present invention, the mesoporous inorganic particles are considered as pigments and thus to contribute to the overall pigment volume concentration of coating layer b), although the mesoporous particles will not necessarily provide colour and/or hiding power to coating layer b). Mesoporous particles are particles containing pores with diameters in the range of 2 nm to 50 nm. Typical mesoporous materials include silica and alumina, mesoporous silica being preferred. Mesoporous oxides of niobium, tantalum, titanium, zirconium, cerium, and tin are suitable as well. Mesoporous inorganic particles can be prepared according to know methods, such as described in United States patents US 3556725, US 3493341, and US 3383172. They are also available commercially, for example from PQ Silica Corporation under the trade designation SD4570. Also chromatography grade silica is suitable. Such silicas are available commercially and often have a pore diameter of 6 nm.

As mentioned above, the PVC in layer b) is higher than the CPVC. The PVC may be at least 2, 3, or even 4 times the CPVC.

The pigments in coating layer b) may be a mixture of standard pigments and mesoporous inorganic particles. The standard pigments may provide color, hiding and visual effect properties to the coating as desired and known in the art. In one embodiment, the pigments may also provide infrared radiation absorbent or reflective properties. The mesoporous inorganic particles suitably contribute at least 10% by weight of the total weight of the pigments, and they may contribute up to 50 %, or 70, or even above 90% by weight of the total weight of the pigments in coating layer b). In one embodiment, the pigment in coating layer b) consists of or essentially consists of mesoporous inorganic particles.

Coating layer b) suitably comprises a film forming polymeric binder resin, for example a polyurethane, a polyacrylate, a polyester, or mixtures thereof. The coating composition for preparing coating layer b) may be an aqueous coating composition or a non-aqueous coating composition. Aqueous compositions are preferred. In addition to the components mentioned above, the coating composition may also comprise other components and additives which are usually present in coating compositions, such as organic co-solvents, coalescing agents, and rheology additives. Application and curing of the coating layer b) is usually carried out as described above for coating layer a).

The absorbent top coating layer b) generally has a dry film layer thickness of at least 50 µm, or at least 100 µm, and preferably at least 120 µm. The dry film layer thickness normally does not exceed 400 µm. A dry film layer thickness in the range of 120 µm to 180 µm, such as 150 µm, has been found to give very favourable results.

The invention further relates to a process of temporary protection of a substrate from a contaminant, comprising the steps of
a) applying to the substrate a multilayer coating system comprising a peelable coating layer and an absorbent top coating layer pigmented above the critical pigment volume concentration, and wherein the pigment comprises mesoporous inorganic particles, and
b) exposing the substrate to a contaminant wherein at least a part of the contaminant is absorbed in the absorbent top coating layer.

After absorption of a contaminant in the top coating layer the multilayer coating system can be removed from the substrate by peeling. Alternatively, removal is also possible by treatment with a water jet. The removed multilayer coating contains the absorbed contaminant and can be disposed properly. As a result, the substrate is free of contaminant.

The invention further relates to kit of parts for preparation of the peelable multi layer coating system of the invention, comprising
a) an aqueous coating composition for forming a peelable temporary coating on a substrate, said aqueous coating composition comprising
   i) at least one water based film-forming polymer, and
   ii) solid particles of an amino resin based polymer, and
b) a coating composition for forming an absorbent top coating layer pigmented above the critical pigment volume concentration, and wherein the pigment comprises mesoporous inorganic particles.

The multilayer coating system and the process of the invention are very useful for temporary protection of vehicles and buildings against various contaminants, for example toxic gases, vapors, and liquids. In this case, the absorbent top coating may also comprise a component which supports the decomposition of the contaminant in order to transform it into a less dangerous or non dangerous form. This may be implemented by doping of the mesoporous inorganic particles with catalytically active metals. The preparation of vanadium-doped mesoporous silica for this purpose is described in an article by C. Ringenbach et al. in Chemistry of Materials, Vol. 17 (2005), pp. 5580-5586. Alternatively or additionally, the absorbent top coating may also comprise an indicator component, which provides a visual indication of the loading of the coating with specific contaminants. The visual indication can for example be provided in the form of a color change.

In a further embodiment, the invention can be used to protect vehicles and buildings against vandalism by graffiti sprayers. After application of graffiti, the multilayer coating can be removed easily to restore the original appearance of the building or vehicle.

In a still further embodiment, the multilayer coating can be applied to interior walls of buildings to absorb air contaminants, such as unpleasant or offensive odours, for example in kitchens, hospitals or changing rooms. Once the absorbent top coating is saturated with contaminants, it can be removed by peeling and, if required, it can be replaced with a fresh multilayer coating.

In a further embodiment, it is also possible to prepare the peelable multilayer coating system on a temporary substrate and to transfer the multilayer coating system to the substrate to be protected when such protection is required.

### Examples

Peelable multilayer coating systems were prepared on metal panel surfaces, which were pre-coated with a polyurethane coating layer. Hence, the substrate surfaces used in the Examples represented a typical vehicle surface.

A peelable coating layer was prepared by applying Intergard® 10220. Intergard® 10220 is a one-component aqueous polyurethane based coating composition for preparation of peelable coatings. It is available from Akzo Nobel Aerospace Coatings. The material was applied in the accordance with the instructions provided in the technical data sheet of the supplier.

Absorbent coating composition 1 was prepared by mixing the following components:

| Component | Parts by weight |
|---|---|
| Aqueous acrylic polymer dispersion (Revacryl 274) | 13.6 |
| Pigment preparation | 10.0 |
| Water | 58.0 |
| Mesoporous silica | 6.7 |
| Ethylene glycol monobutyl ether | 3.9 |
| Rheology additives (thickener) | 7.8 |

Absorbent coating composition 2 was prepared by mixing the following components:

| Component | Parts by weight |
|---|---|
| Aqueous aliphatic polyurethane dispersion (NeoRez 987) | 11.1 |
| Water | 66.2 |
| Mesoporous silica | 14.3 |
| Ethylene glycol monobutyl ether | 2.7 |
| Rheology additives (thickener) | 5.7 |

Multilayer coating systems according to the invention were prepared by applying the above absorbent coating compositions on top of the coasting layers prepared from Intergard® 10220. The absorbent coating compositions were applied by spraying. The dry film thickness was at least 150 µm. The multilayer coating system prepared from absorbent coating composition 1 exhibited a cracked surface structure after drying. The multilayer coating system prepared from absorbent coating composition 2 exhibited a smooth surface. Both multilayer coating systems were tested for absorption of thickened sulfur mustard (tHD) according to standards set in DEFSTAN 80-220 (10 mg/cm², 5 µl drop size, 1 h dwell time). Absorptions of 90% or higher were observed. The multilayer coating system prepared from absorbent coating composition 1 exhibited a faster absorption than the multilayer coating system prepared from absorbent coating composition 2. This is believed to be caused by the channeling effect of the cracked surface.

The multilayer coating systems could be removed from the substrate by manual peeling.

## Claims

1. A peelable multilayer coating system comprising
a) a peelable coating layer and
b) an absorbent top coating layer pigmented above the critical pigment volume concentration, and wherein the pigment comprises mesoporous inorganic particles.

2. A peelable multilayer coating system according to claim 1, wherein the mesoporous inorganic particles are mesoporous silica particles.

3. A peelable multilayer coating system according to claim 1 or 2, wherein the pigment consist essentially of mesoporous inorganic particles.

4. A peelable multilayer coating system according to ant one of the preceding claims, wherein layer a) and layer b) have a common layer boundary.

5. A peelable multilayer coating system according to any one of the preceding claims, wherein the peelable coating layer a) comprises solid particles of an amino resin based polymer.

6. A process of temporary protection of a substrate from a contaminant, comprising the steps of
a) applying to the substrate a multilayer coating system comprising a peelable coating layer and an absorbent top coating layer pigmented above the critical pigment volume concentration, and wherein the pigment comprises mesoporous inorganic particles, and
b) exposing the substrate to a contaminant wherein at least a part of the contaminant is absorbed in the absorbent top coating layer.

7. A process according to claim 6, comprising the additional step of c) removing the multilayer coating system from the substrate by peeling.

8. A process according to claim 6 or 7, wherein the peelable coating layer a) is prepared from an aqueous coating composition.

9. A process according to any one of claims 6 to 8, wherein the absorbent top coating layer b) is prepared from an aqueous coating composition.

10. A kit of parts for preparation of the peelable multi layer coating system of claim 1, comprising
a) an aqueous coating composition for forming a peelable temporary coating on a substrate, said aqueous coating composition comprising
i) at least one water based film-forming polymer, and
ii) solid particles of an amino resin based polymer, and
b) a coating composition for forming an absorbent top coating layer pigmented above the critical pigment volume concentration, and wherein the pigment comprises mesoporous inorganic particles.
